(19) Europäisches Patentamt / European Patent Office / Office européen des brevets

(11) **EP 4 606 679 A1**

(12) **EUROPEAN PATENT APPLICATION**

(43) Date of publication:
**27.08.2025 Bulletin 2025/35**

(21) Application number: **24158930.8**

(22) Date of filing: **21.02.2024**

(51) International Patent Classification (IPC):
**B62D 9/00** *(2006.01)*

(52) Cooperative Patent Classification (CPC):
**B62D 9/00**; B62D 9/002

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventor: **HELFRICH, Thorsten**
**416 60 GÖTEBORG (SE)**

(74) Representative: **Ström & Gulliksson AB**
**P.O. Box 4188**
**203 13 Malmö (SE)**

Remarks:
Amended claims in accordance with Rule 137(2) EPC.

(54) **STEERING OF A VEHICLE AT STANDSTILL**

(57) Disclosed is a computer-implemented method for steering of a vehicle at standstill, wherein a steered wheel of the vehicle is configured to be individually driven. The method comprises applying (by processing circuitry of a computer system) a torque to the steered wheel, wherein the torque is configured to cause a rotation of the steered wheel that corresponds to a rolling distance of the steered wheel, wherein the rolling distance depends on a change of steering angle multiplied by a steering axis offset.

In some examples, the method further comprises (before applying the torque) reducing (by the processing circuitry) a braking force applied to the steered wheel.

In some examples, the method further comprises increasing (by the processing circuitry) a braking force applied to non-steered wheels of the vehicle.

Corresponding computer system, control system, vehicle, computer program product, and non-transitory computer-readable storage medium are also disclosed.

FIG. 1

EP 4 606 679 A1

**Description**

**TECHNICAL FIELD**

The disclosure relates generally to vehicle control. In particular aspects, the disclosure relates to steering of a vehicle at standstill. The disclosure can be applied to heavy-duty vehicles, such as trucks, buses, and construction equipment, among other vehicle types. The suggested approaches may be suitable for off-road situations as well as situations where the vehicle rests on road surface. Although the disclosure may be described with respect to a particular vehicle, the disclosure is not restricted to any particular vehicle.

**BACKGROUND**

When a vehicle at standstill is subjected to a steering (e.g., due to steering wheel rotation), the tire(s) of the steered wheel(s) are typically worn due to scrubbing against the ground surface. Furthermore, the force (e.g., as applied by a driver to the steering wheel) required for execution of steering at standstill may be relatively substantial.

Therefore, there is a need for alternative approaches for steering of a vehicle at standstill.

**SUMMARY**

Various aspects may aim to solve, mitigate, alleviate, or eliminate at least some of the above or other disadvantages.

According to a first aspect of the disclosure, a computer system is provided for steering of a vehicle at standstill, wherein a steered wheel of the vehicle is configured to be individually driven. The computer system comprises processing circuitry configured to apply a torque to the steered wheel, wherein the torque is configured to cause a rotation of the steered wheel that corresponds to a rolling distance of the steered wheel, wherein the rolling distance depends on a change of steering angle multiplied by a steering axis offset. The first aspect of the disclosure may seek to provide an arrangement for improving steering of a vehicle at standstill. A technical benefit may include decreased (and/or more even) tire wear. Alternatively or additionally, a technical benefit may include facilitated steering (e.g., less force needed to execute the steering). Yet alternatively or additionally, a technical benefit may include decreased erosion of the ground material for off-road situations.

According to a second aspect of the disclosure, a computer-implemented method is provided for steering of a vehicle at standstill, wherein a steered wheel of the vehicle is configured to be individually driven. The method comprises applying (by processing circuitry of a computer system) a torque to the steered wheel, wherein the torque is configured to cause a rotation of the steered wheel that corresponds to a rolling distance of the steered wheel, wherein the rolling distance depends on a change of steering angle multiplied by a steering axis offset. The second aspect of the disclosure may seek to improve steering of a vehicle at standstill. A technical benefit may include decreased (and/or more even) tire wear. Alternatively or additionally, a technical benefit may include facilitated steering (e.g., less force needed to execute the steering). Yet alternatively or additionally, a technical benefit may include decreased erosion of the ground material for off-road situations.

Optionally in some examples, including in at least one preferred example, the rolling distance of the steered wheel may equal the change of steering angle multiplied by the steering axis offset. A technical benefit may include simplicity in determination of the rolling distance.

Optionally in some examples, including in at least one preferred example, the steering axis offset may be based on a change of suspension and/or on suspension kinematics. A technical benefit may include accuracy in determination of the rolling distance.

Optionally in some examples, including in at least one preferred example, the vehicle may comprise first and second steered wheels configured to be individually driven, and applying the torque to the steered wheel may comprise applying a first torque to the first steered wheel and a second torque to the second steered wheel, wherein the first and second torques have opposite direction. A technical benefit may include minimal dislocation of the vehicle body during the steering.

Optionally in some examples, including in at least one preferred example, the individual drive for a steered wheel may be implemented by a corresponding electric motor associated with the steered wheel, and applying the torque comprises controlling the electric motor to apply the torque. A technical benefit may include simplicity of implementation.

Optionally in some examples, including in at least one preferred example, the method may further comprise, before applying the torque, reducing (by the processing circuitry) a braking force applied to the steered wheel. A technical benefit may include that rolling of the wheel based on the applied torque is facilitated.

Optionally in some examples, including in at least one preferred example, the method may further comprise increasing (by the processing circuitry) a braking force applied to non-steered wheels of the vehicle. A technical benefit may include that a risk of dislocation (e.g., rolling) of the vehicle during the steering is reduced.

Optionally in some examples, including in at least one preferred example, the method may further comprise determining (by the processing circuitry) whether a braking force of non-steered wheels of the vehicle fulfills a safety condition, and reducing the braking force applied to the steered wheel responsive to the safety condition being fulfilled. A technical benefit may include that a risk of unsafe behavior of the vehicle, while steering using an applied torque with reduced braking force for the steered wheel(s), is reduced.

Optionally in some examples, including in at least one preferred example, the determination whether a braking force of non-steered wheels of the vehicle fulfills a safety condition may comprise determining whether a current braking force applied to non-steered wheels of the vehicle fulfills the safety condition, and/or determining whether a maximum braking force applicable to non-steered wheels of the vehicle fulfills the safety condition. A technical benefit may include that the braking force applied to non-steered wheels is not unnecessarily increased. Alternatively or additionally, a technical benefit may include that the braking force for the steered wheel(s) is only reduced when braking of the non-steered wheels have capacity to sufficiently compensate for the reduction.

According to a third aspect of the disclosure, a control system is provided, comprising one or more control units configured to perform the method of the second aspect. The third aspect of the disclosure may seek to provide an arrangement for improving steering of a vehicle at standstill. A technical benefit may include decreased (and/or more even) tire wear. Alternatively or additionally, a technical benefit may include facilitated steering (e.g., less force needed to execute the steering). Yet alternatively or additionally, a technical benefit may include decreased erosion of the ground material for off-road situations.

According to a fourth aspect of the disclosure, a vehicle is provided comprising the computer system of the first aspect and/or processing circuitry configured to perform the method of the second aspect. The fourth aspect of the disclosure may seek to provide a vehicle with improved steering at standstill. A technical benefit may include decreased (and/or more even) tire wear. Alternatively or additionally, a technical benefit may include facilitated steering (e.g., less force needed to execute the steering). Yet alternatively or additionally, a technical benefit may include decreased erosion of the ground material for off-road situations.

Optionally in some examples, including in at least one preferred example, the vehicle may further comprise one or more steered wheels with individual drive.

According to a fifth aspect of the disclosure, a computer program product is provided comprising program code for performing, when executed by processing circuitry, the method of the second aspect. The fifth aspect of the disclosure may seek to convey program code for improving steering at standstill of a vehicle. A technical benefit may include that new vehicles and/or legacy vehicles may be conveniently configured, by software installation/update, to apply a torque to the steered wheel, wherein the torque is configured to cause a rotation of the steered wheel that corresponds to a rolling distance of the steered wheel, wherein the rolling distance depends on a change of steering angle multiplied by a steering axis offset.

According to a sixth aspect of the disclosure, a non-transitory computer-readable storage medium is provided comprising instructions, which when executed by processing circuitry, cause the processing circuitry to perform the method of the second aspect. The sixth aspect of the disclosure may seek to convey instructions (e.g., program code) for improving steering at standstill of a vehicle. A technical benefit may include that new vehicles and/or legacy vehicles may be conveniently configured, by software installation/update, to apply a torque to the steered wheel, wherein the torque is configured to cause a rotation of the steered wheel that corresponds to a rolling distance of the steered wheel, wherein the rolling distance depends on a change of steering angle multiplied by a steering axis offset.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is a flowchart illustrating a method according to some examples.
**FIG. 2** is a schematic drawing illustrating a side view of a vehicle according to some examples.
**FIG. 3** is a schematic drawing illustrating a top view of a vehicle according to some examples.
**FIG. 4** is a schematic block diagram illustrating actuation control according to some examples.
**FIG. 5** is a collection of schematic drawings illustrating a steered wheel according to some examples.

**FIG. 6** is a schematic diagram illustrating a computer system for implementing examples disclosed herein, according to some examples.

**FIG. 7** is a schematic drawing illustrating a computer program product, in the form of a non-transitory computer-readable storage medium, according to some examples.

**FIG. 8** is a schematic block diagram of a control unit according to some examples.

## DETAILED DESCRIPTION

The detailed description set forth below provides information and examples of the disclosed technology with sufficient detail to enable those skilled in the art to practice the disclosure.

According to some examples, approaches for steering of a vehicle at standstill is suggested.

Some of the suggested approaches may reduce tire wear due to steering at standstill. Alternatively or additionally, some of the suggested approaches may cause tire wear due to steering at standstill to be more evenly distributed over the lateral dimension of the tire.

Yet alternatively or additionally, some of the suggested approaches may reduce the force that is required for executing steering at standstill (i.e., a steering effort may be reduced). For example, this force reduction may facilitate the steering operation as performed by an operator (e.g., driver) of the vehicle in that the force that needs to be applied to the steering wheel is reduced. Alternatively or additionally, this force reduction may reduce the required force(s) within the steering system of the vehicle (e.g., power steering system for an electric vehicle), regardless of the source of the steering request (e.g., steering wheel or autonomous driving control system). Accordingly, the suggested approaches may be used to reduce the requirements on steering components (e.g., downsize a steering system) in some examples.

Steering at standstill with a braked wheel leads to that the tire of the wheel is forced across the ground surface (scrubbing), which typically causes tire wear and/or requires rather substantial steering effort (required force for steering). At least some of the suggested approaches aims to reduce one or more of these problems.

Furthermore, it may be desirable that the steering is experienced as smooth (e.g., to driver and/or passenger(s) of the vehicle), and at least some of the suggested approaches may achieve that.

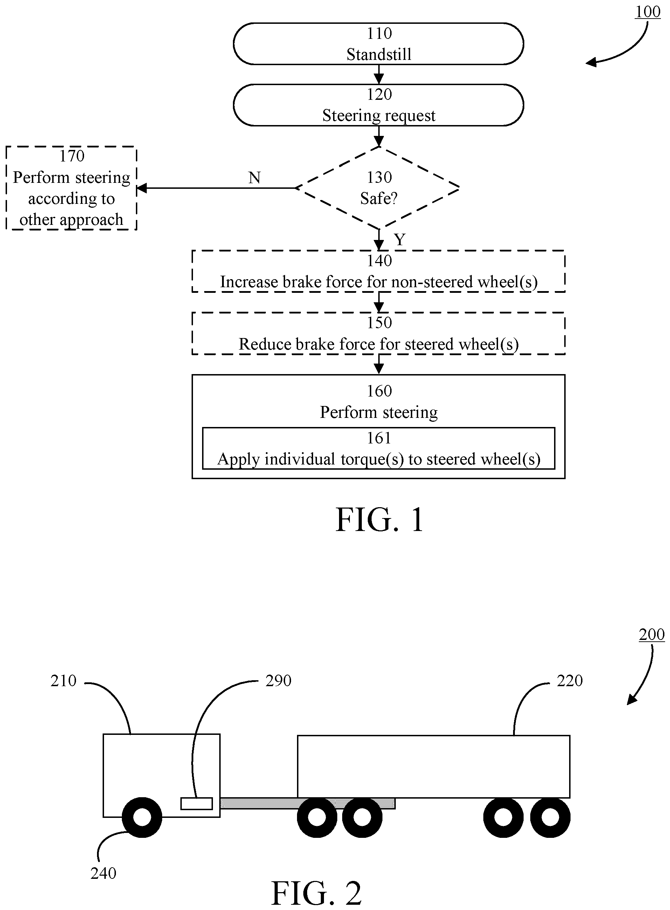

**FIG. 1** illustrates a method **100** for steering of a vehicle according to some examples. The method **100** is a computer-implemented method performed by processing circuitry of a computer system.

The method **100** is applicable when each of at least one (e.g., one, two, some, or all) steered wheel(s) of the vehicle is configured to be individually driven. For example, individual wheel drive may be implemented by a respective electrical machine being associated with each of the individually driven wheel(s).

As illustrated by **110**, the method **100** is applicable for steering of a vehicle at standstill.

When, as illustrated by **120**, a steering request is received (e.g., from a steering wheel, or from an autonomous driving control system), the method **100** comprises applying a torque to the steered wheel when performing the steering, as illustrated by **160** and sub-step **161**.

For example, when the individual drive for a steered wheel is implemented by a corresponding electric motor associated with the steered wheel (e.g., an electric motor configured to control the wheel), the torque may be applied by controlling the electric motor to apply the torque.

It should be noted that such torque may be applied to a single steered wheel only, or to two or more steered wheels. When such torque is applied to two or more steered wheels, such two or more steered wheels may be with or without mechanical linkage among them. Typically, torque may be applied to both wheels of one or more steered wheel axle(s) of the vehicle.

The applied torque is configured to cause a rotation of the steered wheel that corresponds to a rolling distance of the steered wheel, wherein the rolling distance depends on (e.g., equals) a change of steering angle $\Delta\delta$ multiplied by a steering axis offset $r_k$.

The application of the torque may be implemented in any suitable way. For example, an electric motor associated with the steered wheel may be operated in a mode where it is configured to control the angular rotation of the steered wheel. Then, given the rolling distance to be travelled by the wheel, a suitable torque may be applied that causes the steered wheel to perform an angular rotation that corresponds to the rolling distance. Thus, the torque to be applied may be defined via the angular rotation required for the wheel to travel the rolling distance. Thereby, the same rolling distance may be associated with different torque values in different situations depending on other circumstances (e.g., friction, etc.).

The rolling distance may correspond to the distance that a point where the tire center plane intersects the contact patch of the tire needs to move (roll or scrub) around the steering axis to implement the change of steering angle.

The change of the steering angle may be defined as how much the wheel needs to rotate around the steering axis of the wheel to implement the steering request when starting from its current position. The steering axis offset may be defined as a lateral distance from mid-tire (tire center plane) to an intersection between the steering axis and the ground surface. It should be noted that one or more of these parameters (rolling distance, change of steering angle, steering axis offset) may be different for different steered wheels, or may have the same value for two or more steered wheels.

The steering axis offset may be determined in any suitable way. For example, the steering axis offset may be determined based on suspension kinematics and/or how the different suspension arms, such as control arms and steering arms, connect to the wheel carrier (e.g., length and connection points of the suspension arms). In some examples, the axis offset may be calculated based on, e.g., the lengths of the suspension arms. Alternatively or additionally, the steering axis offset may be found by simulating movement of the wheel (e.g., during steering). It should be noted that the steering axis offset may depend on the vertical position of the steered wheel relative to the chassis (e.g., the steered wheel being in a hole or the like).

According to some examples, the steering axis offset may be manipulated by an individually controllable suspension for the steered wheel. Thus, the steering axis offset may be based on a change of suspension in some examples. For example, raising the steered wheel may move the intersection between the steering axis and the ground surface outwards from the vehicle. Raising the steered wheel may, for example, be accomplished by increasing the air volume of an air suspension device associated with the wheel, and/or by reducing the vertical load of the wheel via a controllable suspension system for load distribution.

When the vehicle comprises first and second steered wheels (e.g., two wheels on a same wheel axle) configured to be individually driven, a first torque may be applied to the first steered wheel and a second torque may be applied to the second steered wheel.

Typically, the first and second torques have opposite direction (i.e., one is to roll forward and one is to roll backwards). For example, the first and second torques may have the same magnitude with different signs. More generally, the first and second torques may be individually determined for each of the applicable wheels. It should be noted that these principles may be applied to a single wheel axle with steered wheels, or to two or more single wheel axles with steered wheels.

As illustrated by optional step **150**, the method **100** may comprise reducing a braking force applied to the steered wheel before applying the torque. In some examples, step **150** comprises completely releasing all braking applied to the steered wheel. Releasing the braking enables the steered wheel to travel the rolling distance by rolling only, while only partially reducing the braking force may result in a scrub/roll combination for travelling the rolling distance.

As illustrated by optional step **140**, the method **100** may comprise increasing a braking force applied to non-steered wheels (and/or to other steered wheels) of the vehicle. This may be particularly useful when the braking force applied to steered wheel(s) is reduced as illustrated in step **150**. Although step **140** is illustrated as preceding step **150**, they may be executed in parallel according to some examples. In some situations, step **140** is not executed even if the braking force applied to steered wheel(s) is reduced as illustrated in step **150**. For example, the current braking force applied to non-steered wheels (and/or to other steered wheels) may already be enough, so no increase is necessary before the reduction of step **150**.

It should be noted that the braking force increase of step **140** may apply to any suitable wheel(s) of the vehicle (e.g., wheels of a trailer unit when the steered wheels are wheels of a tractor unit).

It should also be noted that the braking forces of steps **140** and **150** may refer to braking implementation by any suitable approach (e.g., electrical machine braking, service braking, etc.).

According to some examples, the method **100** comprises determining whether a braking force of non-steered wheels of the vehicle fulfills a safety condition, as illustrated by optional step **130**. If the safety condition is fulfilled (Y-path out of step **130**) the method continues towards step **160** (possibly via **140** and/or **150**), where the torque is applied as explained above. If the safety condition is not fulfilled (N-path out of step **130**) the method continues towards step **170**, where steering is performed according to some other approach (i.e., without applied torque after brake force reduction). Thus, in some examples, the braking force applied to the steered wheel is reduced in step **150** responsive to (e.g., only when) the safety condition being fulfilled in step **130**.

The safety condition may be any suitable condition relating to safety. For example, the safety condition could be that the vehicle should not be able to spontaneously start moving (e.g., in a longitudinal direction). The safety condition could take environmental factors into account (e.g., slope and/or banking of the ground surface).

In some examples, the determination of step **130** comprises determining whether a current braking force applied to non-steered wheels of the vehicle fulfills the safety condition (e.g., whether the current braking force applied to non-steered wheels is able to hinder the vehicle form starting to roll), in which case the increase of step **140** may not be needed.

Alternatively or additionally, in some examples, the determination of step **130** comprises determining whether a maximum braking force applicable to non-steered wheels of the vehicle fulfills the safety condition (e.g., whether the maximum possible braking force for the non-steered wheels is able to hinder the vehicle form starting to roll), in which case the increase of step **140** may be suitable.

Alternatively or additionally to the checking the safety condition in step **130**, there may be a check of whether or not the suggested approach with individual torque(s) applied for steered wheel(s) is likely to be beneficial. If it is likely to be beneficial, the method continues towards step **160** (possibly via **140** and/or **150**), where the torque is applied as explained above. If it is not likely to be beneficial, the method continues towards step **170**, where steering is performed according to some other approach. For example, the suggested approach with individual torque(s) applied for steered wheel(s) may be deemed likely to be beneficial when a load (e.g., an axle load, or a wheel load) for the steered wheel(s) exceeds a load threshold value. When the load for the steered wheel(s) is relatively low, the required steering effort and/or the tire wear is typically fairly low even without the suggested approach with individual torque(s) applied for steered wheel(s).

**FIG. 2** schematically illustrates an example vehicle **200** for cargo transport where the techniques disclosed herein can be advantageously applied. The vehicle **200** comprises a truck/tractor/towing unit **210** configured to tow one or more trailer unit(s) **220** in a known manner.

The vehicle **200** comprises one or more steered wheel(s) **240** with individual drive (e.g., implemented by an associated electrical machine).

The tractor unit **210** and/or the trailer unit(s) **220** may comprise a vehicle control unit (VCU) **290** configured to perform various vehicle control functions, such as vehicle motion management (VMM). For example, any of one or more VCU(s) **290** may be configured to perform one or more steps of the method **100** of **FIG. 1** in relation to the one or more steered wheel(s) **240** with individual drive. Thus, the techniques disclosed herein may be performed by any of one or more VCU(s) **290**.

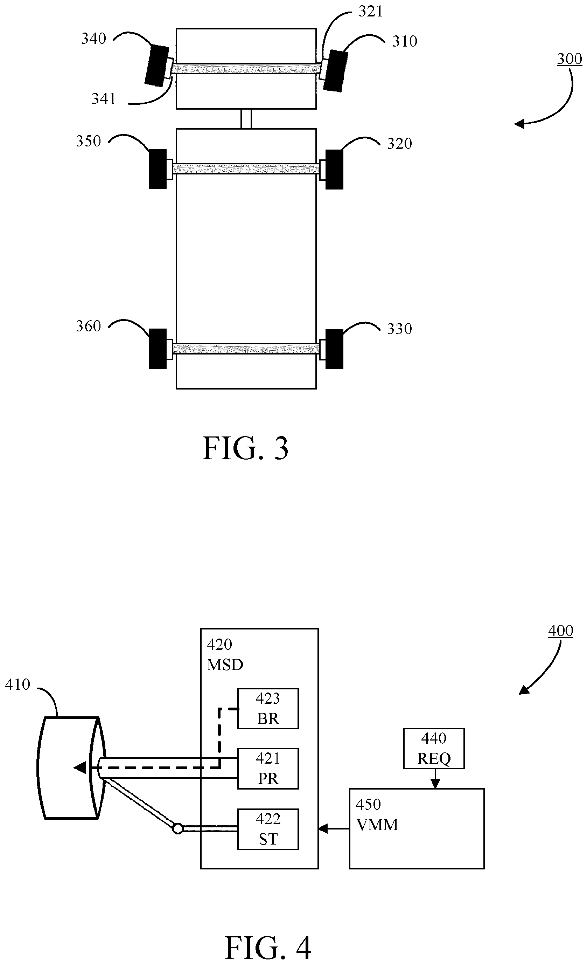

**FIG. 3** schematically illustrates a top view of a vehicle **300** with two vehicle units and six wheels **310**, **320**, **330**, **340**, **350**, **360**. For example, the vehicle **300** may be seen as a schematic representation of the vehicle **200** of **FIG. 2** (wherein each of the wheel pairs of the trailer unit **220** is represented by a single wheel in **FIG. 3**). Alternatively or additionally, the vehicle **300** may be configured to perform one or more steps of the method **100** described in connection with **FIG. 1**.

The vehicle **300** has two steered wheels **310**, **340** configured to be individually driven by means of respective electrical machines **321**, **341**.

For example, when the vehicle **300** is to be steered at standstill, a torque may be applied to one or both of the steered wheels **310**, **340** as described herein (compare with **161** of **FIG. 1**) while the wheel(s) with applied torque are not subjected to braking (compare with **150** of **FIG. 1**). Possibly, the braking of one or more of the other wheels **320**, **330**, **350**, **360** may be increased (compare with **140** of **FIG. 1**), for example to fulfill a safety condition (compare with **130** of **FIG. 1**).

**FIG. 4** schematically illustrates functionality **400** for actuation control of a steered wheel **410** according to some examples.

The control of the steered wheel **410** is performed via some example motion support devices (MSDs) **420**; here comprising a propulsion device (PR) **421**, such as an electric machine, a power steering arrangement (ST) **422**, and a braking actuator (BR) **423**. The propulsion device **421**, the power steering arrangement **422**, and the braking actuator **423** are examples of actuators which can be controlled by one or more MSD control units. It should be noted that any suitable actuator(s) may be used as MSD(s), and that **FIG. 4** only represents an example set of MSDs. It should be noted that the MSDs **420** typically includes more actuators than those illustrated in **FIG. 4**. For example, a vehicle may comprise several steered and non-steered wheels.

A vehicle motion management (VMM) function **450** may be employed to perform force and torque allocation to meet received motion requests (REQ; e.g., a steering request) **440** in a safe and robust manner. The VMM function **450** communicates actuator instructions to the different MSDs via MDS control unit(s). The VMM function **450** manages both force/torque generation and MSD coordination; i.e., it determines what forces are required for different wheels, suspension points, and vehicle units in order to fulfil the motion requests **440**. For example, the VMM function **450** may be comprised in a, such as the VCU **290** of **FIG. 2**. Alternatively or additionally, the VMM function **450** may be configured to cause execution of (e.g., may be configured to perform) one or more steps of the method **100** of **FIG. 1**.

When the vehicle that the functionality **400** controls is at standstill and a steering request **440** is received, the VMM **450** may cause a torque to be applied to the wheel **410** by instructing the propulsion device **421** accordingly, while causing the wheel **410** to be steered to fulfill the steering request **440** by instructing the steering arrangement **422** accordingly.

The VMM **450** may also cause any braking force applied to the wheel **410** to be released by instructing the braking actuator **423** accordingly, and/or increase the braking of one or more other wheels.

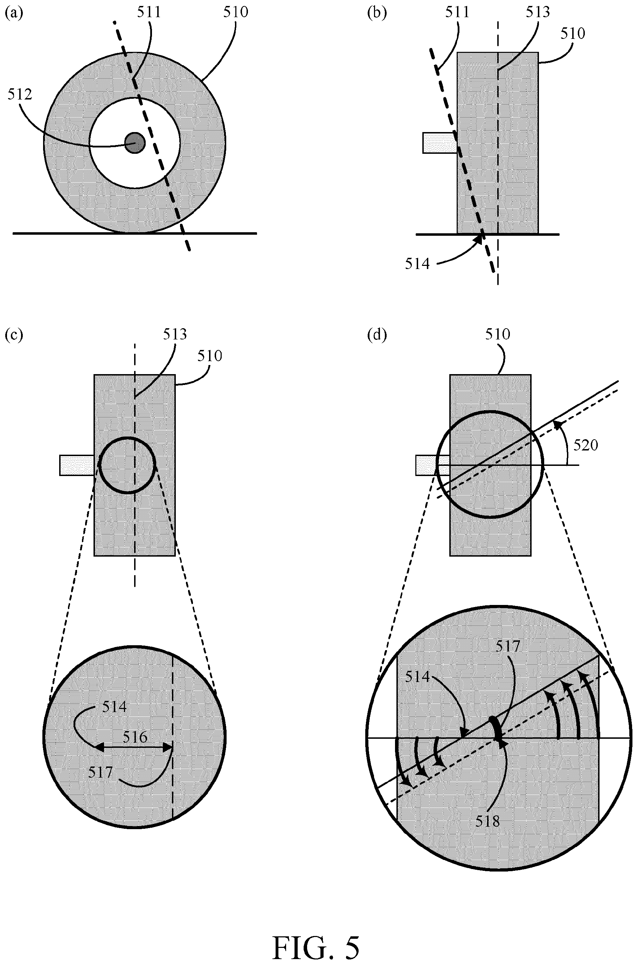

**FIG. 5** schematically illustrates some different views of a steered wheel **510** according to some examples; (a) side view, (b) rear view, (c) top view, (d) top view. **FIG. 5** may be seen as an example illustration of various parameters and geometrical entities used herein.

The wheel **510** has a steering axis **511**, and a mid-point **512** to which a torque may be applied. The steering axis offset $r_k$ is defined as a lateral distance **516** from the tire center plane **513** to an intersection **514** between the steering axis and the ground surface.

The rolling distance **517** corresponds to the distance that a point **518** where the tire center plane **513** intersects the contact patch of the tire needs to move (roll or scrub) around the steering axis **511**, **514** to implement a change of steering angle $\Delta\delta$. In **FIG. 5**, the change of steering angle is illustrated as **520** (assuming an initial steering angle of zero). Using geometrics, the rolling distance **517** can be expressed as equaling the change of steering angle $\Delta\delta$ **520** (in radians) multiplied by the steering axis offset $r_k$ **516**.

It may be noted from FIG. 5 (d) that - if the torque as suggested herein is not applied - the area A of scrubbing (i.e.,

the two circle sector areas resulting from the movement illustrated by bold arrows) grows with the magnitude of the steering axis offset $r_k$;

$$A = \frac{1}{2}\left(\frac{w}{2} + r_k\right)^2 \Delta\delta + \frac{1}{2}\left(\frac{w}{2} - r_k\right)^2 \Delta\delta = \left(\left(\frac{w}{2}\right)^2 + r_k{}^2\right)\Delta\delta.$$

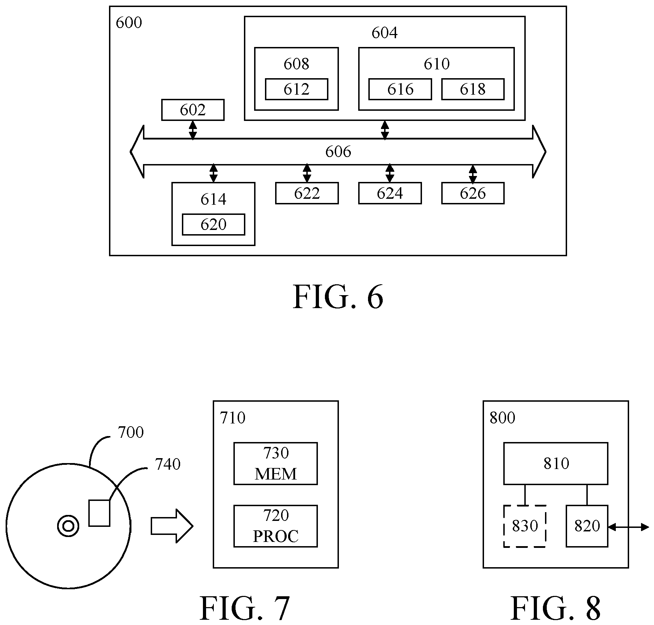

**FIG. 6** is a schematic diagram of a computer system **600** for implementing examples disclosed herein. For example, the computer system **600** (or part thereof) may be comprised in the VCU **290** of **FIG. 2**. Alternatively or additionally, the computer system **600** may be configured to cause execution of (e.g., may be configured to perform) one or more steps of the method **100** of **FIG. 1**. Yet alternatively or additionally, the computer system **600** may be configured to implement the VMM function **450** of **FIG. 4**.

The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a VCU.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 7** illustrates a computer program product exemplified as a non-transitory computer-readable medium in the form of a compact disc (CD) ROM **700**. The computer-readable medium has stored thereon program code **740** comprising instructions. The program code is loadable into processing circuitry (PROC; e.g., a data processing unit) **720**, which may, for example, be comprised in a VCU **710**. When loaded into the processing circuitry, the program code may be stored in a memory (MEM) **730** associated with, or comprised in, the processing circuitry. According to some examples, the program code may, when loaded into, and run by, the processing circuitry, cause execution of method steps according to any of the methods described herein; such as the method discussed in connection to **FIG. 1**.

**FIG. 8** schematically illustrates, in terms of a number of functional units, the components of a control unit **800** according to some examples. This control unit **800** may be comprised in the vehicle **200**; e.g., in the form of a VCU **290**. Processing circuitry **810** is provided using any combination of one or more of a suitable central processing unit CPU, multiprocessor, microcontroller, digital signal processor DSP, etc., capable of executing software instructions stored in a computer program product, e.g. in the form of a storage medium **830**. The processing circuitry **810** may further be provided as at least one application specific integrated circuit ASIC, or field programmable gate array FPGA.

Particularly, the processing circuitry **810** is configured to cause the control unit **800** to perform a set of operations, or steps, according to any of the methods described herein; such as the method discussed in connection to **FIG. 1**. Consequently, there is disclosed herein a control unit **800** for controlling a heavy-duty vehicle **200** as described herein.

For example, the storage medium **830** may store the set of operations, and the processing circuitry **810** may be configured to retrieve the set of operations from the storage medium **830** to cause the control unit **800** to perform the set of operations. The set of operations may be provided as a set of executable instructions. Thus, the processing circuitry **810** is thereby arranged to execute method steps as herein disclosed. In particular, there is disclosed a control unit **800** for controlling an articulated vehicle **200** comprising a tractor **210** and/or one or more towed vehicle units **220**, the control unit comprising processing circuitry **810**, an interface **820** coupled to the processing circuitry **810**, and a memory **830** coupled to the processing circuitry **810**, wherein the memory comprises machine readable computer program instructions that, when executed by the processing circuitry, causes the control unit to perform any one or more of the method steps discussed herein.

The storage medium **830** may also comprise persistent storage, which, for example, can be any single one or combination of magnetic memory, optical memory, solid state memory or even remotely mounted memory.

The control unit **800** may further comprise an interface **820** for communications with at least one external device. As such, the interface **820** may comprise one or more transmitters and receivers, comprising analogue and digital components and a suitable number of ports for wireline or wireless communication.

The processing circuitry **810** controls the general operation of the control unit **800**, e.g., by sending data and control signals to the interface **820** and the storage medium **830**, by receiving data and reports from the interface **820**, and by retrieving data and instructions from the storage medium **830**. Other components, as well as the related functionality, of the control node are omitted in order not to obscure the concepts presented herein.

### A non-exhaustive list of Examples:

**Example 1**: A computer system for steering of a vehicle at standstill, wherein a steered wheel of the vehicle is configured to be individually driven, the computer system comprising processing circuitry configured to apply a torque to the steered wheel, wherein the torque is configured to cause a rotation of the steered wheel that corresponds to a rolling distance of the steered wheel, wherein the rolling distance depends on a change of steering angle multiplied by a steering axis offset.

**Example 2**: The computer system of **Example 1**, wherein the individual drive for a steered wheel is implemented by a corresponding electric motor associated with the steered wheel, and wherein applying the torque comprises controlling the electric motor to apply the torque.

**Example 3**: The computer system of any of **Examples 1-2**, wherein the processing circuitry is further configured to, before application of the torque, reduce a braking force applied to the steered wheel.

**Example 4**: The computer system of **Example 3**, wherein the processing circuitry is further configured to increase a braking force applied to non-steered wheels of the vehicle.

**Example 5**: The computer system of any of **Examples 3-4**, wherein the processing circuitry is further configured to determine whether a braking force of non-steered wheels of the vehicle fulfills a safety condition, and reducing the braking force applied to the steered wheel responsive to the safety condition being fulfilled.

**Example 6**: The computer system of **Example 5**, wherein the determination comprises determining whether a current braking force applied to non-steered wheels of the vehicle fulfills the safety condition, and/or determining whether a maximum braking force applicable to non-steered wheels of the vehicle fulfills the safety condition.

**Example 7**: A computer-implemented method for steering of a vehicle at standstill, wherein a steered wheel of the vehicle is configured to be individually driven, the method comprising applying, by processing circuitry of a computer system, a torque to the steered wheel, wherein the torque is configured to cause a rotation of the steered wheel that corresponds to a rolling distance of the steered wheel, wherein the rolling distance depends on a change of steering angle multiplied by a steering axis offset.

**Example 8**: The method of **Example 7**, wherein the rolling distance of the steered wheel equals the change of steering angle multiplied by the steering axis offset.

**Example 9**: The method of any of **Examples 7-8**, wherein the steering axis offset is based on a change of suspension and/or on suspension kinematics.

**Example 10**: The method of any of **Examples 7-9**, wherein the vehicle comprises first and second steered wheels configured to be individually driven, and wherein applying the torque to the steered wheel comprises applying a first torque to the first steered wheel and a second torque to the second steered wheel, wherein the first and second torques have opposite direction.

**Example 11**: The method of any of **Examples 7-10**, wherein the individual drive for a steered wheel is implemented by a corresponding electric motor associated with the steered wheel, and wherein applying the torque comprises controlling the electric motor to apply the torque.

**Example 12**: The method of any of **Examples 7-11**, further comprising, before applying the torque, reducing, by the processing circuitry, a braking force applied to the steered wheel.

**Example 13**: The method of **Example 12**, further comprising increasing, by the processing circuitry, a braking force applied to non-steered wheels of the vehicle.

**Example 14**: The method of any of **Examples 12-13**, further comprising determining, by the processing circuitry, whether a braking force of non-steered wheels of the vehicle fulfills a safety condition, and reducing the braking force applied to the steered wheel responsive to the safety condition being fulfilled.

**Example 15**: The method of **Example 14**, wherein the determination comprises determining whether a current braking force applied to non-steered wheels of the vehicle fulfills the safety condition, and/or determining whether a maximum braking force applicable to non-steered wheels of the vehicle fulfills the safety condition.

**Example 16**: A control system comprising one or more control units configured to perform the method of any of **Examples 7-15**.

**Example 17**: A vehicle comprising the computer system of any of **Examples 1-6** and/or processing circuitry configured to perform the method of any of **Examples 7-15**.

**Example 18**: The vehicle of **Example 17**, further comprising one or more steered wheels with individual drive.

**Example 19**: A computer program product comprising program code for performing, when executed by processing circuitry, the method of any of **Examples 7-15**.

**Example 20**: A non-transitory computer-readable storage medium comprising instructions, which when executed by processing circuitry, cause the processing circuitry to perform the method of any of **Examples 7-15**.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (290, 600) for steering of a vehicle (200) at standstill, wherein a steered wheel (240, 310, 340, 410, 510) of the vehicle is configured to be individually driven, the computer system comprising processing circuitry (602) configured to apply a torque to the steered wheel, wherein the torque is configured to cause a rotation of the steered wheel that corresponds to a rolling distance (517) of the steered wheel, wherein the rolling distance depends on a change of steering angle (520) multiplied by a steering axis offset (516).

2. A computer-implemented method (100) for steering (120, 160) of a vehicle (200) at standstill (110), wherein a steered wheel (240, 310, 340, 410, 510) of the vehicle is configured to be individually driven, the method comprising: applying (161), by processing circuitry (602) of a computer system (290, 600), a torque to the steered wheel, wherein the torque is configured to cause a rotation of the steered wheel that corresponds to a rolling distance (517) of the steered wheel, wherein the rolling distance depends on a change of steering angle (520) multiplied by a steering axis offset (516).

3. The method of claim 2, wherein the rolling distance of the steered wheel equals the change of steering angle multiplied by the steering axis offset.

4. The method of any of claims 2-3, wherein the steering axis offset is based on a change of suspension and/or on suspension kinematics.

5. The method of any of claims 2-4, wherein the vehicle comprises first and second steered wheels (310, 340) configured to be individually driven, and wherein applying the torque to the steered wheel comprises applying a first torque to the first steered wheel (310) and a second torque to the second steered wheel (340), wherein the first and second torques have opposite direction.

6. The method of any of claims 2-5, wherein the individual drive for a steered wheel is implemented by a corresponding electric motor (321, 341, 421) associated with the steered wheel, and wherein applying the torque comprises controlling the electric motor to apply the torque.

7. The method of any of claims 2-6, further comprising, before applying the torque, reducing (150), by the processing circuitry, a braking force applied to the steered wheel.

8. The method of claim 7, further comprising increasing (140), by the processing circuitry, a braking force applied to non-steered wheels of the vehicle.

9. The method of any of claims 7-8, further comprising determining (130), by the processing circuitry, whether a braking force of non-steered wheels of the vehicle fulfills a safety condition, and reducing (150) the braking force applied to the steered wheel responsive to the safety condition being fulfilled.

10. The method of claim 9, wherein the determination (130) comprises determining whether a current braking force applied to non-steered wheels of the vehicle fulfills the safety condition, and/or determining whether a maximum braking force applicable to non-steered wheels of the vehicle fulfills the safety condition.

11. A control system (600) comprising one or more control units configured to perform the method of any of claims 2-10.

12. A vehicle (200) comprising the computer system of claim 1 and/or processing circuitry configured to perform the method of any of claims 2-10.

13. The vehicle of claim 12, further comprising one or more steered wheels with individual drive.

14. A computer program product (700) comprising program code for performing, when executed by processing circuitry, the method of any of claims 2-10.

15. A non-transitory computer-readable storage medium (700) comprising instructions, which when executed by processing circuitry, cause the processing circuitry to perform the method of any of claims 2-10.

**Amended claims in accordance with Rule 137(2) EPC.**

1. A computer system (290, 600) for steering of a vehicle (200), wherein a steered wheel (240, 310, 340, 410, 510) of the vehicle is configured to be individually driven, the computer system comprising processing circuitry (602) configured to apply a torque to the steered wheel, wherein the torque is configured to cause a rotation of the steered wheel, **characterized in that** - for steering of a vehicle (200) at standstill - the torque is configured to cause a rotation of the steered wheel that corresponds to a rolling distance (517) of the steered wheel, wherein the rolling distance depends on a change of steering angle (520) multiplied by a steering axis offset (516).

2. A computer-implemented method (100) for steering (120, 160) of a vehicle (200), wherein a steered wheel (240, 310, 340, 410, 510) of the vehicle is configured to be individually driven, the method comprising:
applying (161), by processing circuitry (602) of a computer system (290, 600), a torque to the steered wheel, wherein the torque is configured to cause a rotation of the steered wheel, **characterized in that** - for steering of a vehicle (200) at standstill (110) - the torque is configured to cause a rotation of the steered wheel that corresponds to a rolling distance (517) of the steered wheel, wherein the rolling distance depends on a change of steering angle (520) multiplied by a steering axis offset (516).

3. The method of claim 2, wherein the rolling distance of the steered wheel equals the change of steering angle multiplied by the steering axis offset.

4. The method of any of claims 2-3, wherein the steering axis offset is based on a change of suspension and/or on suspension kinematics.

5. The method of any of claims 2-4, wherein the vehicle comprises first and second steered wheels (310, 340) configured to be individually driven, and wherein applying the torque to the steered wheel comprises applying a first torque to the first steered wheel (310) and a second torque to the second steered wheel (340), wherein the first and second torques have opposite direction.

6. The method of any of claims 2-5, wherein the individual drive for a steered wheel is implemented by a corresponding electric motor (321, 341, 421) associated with the steered wheel, and wherein applying the torque comprises controlling the electric motor to apply the torque.

7. The method of any of claims 2-6, further comprising, before applying the torque, reducing (150), by the processing circuitry, a braking force applied to the steered wheel.

8. The method of claim 7, further comprising increasing (140), by the processing circuitry, a braking force applied to non-steered wheels of the vehicle.

9. The method of any of claims 7-8, further comprising determining (130), by the processing circuitry, whether a braking force of non-steered wheels of the vehicle fulfills a safety condition, and reducing (150) the braking force applied to the steered wheel responsive to the safety condition being fulfilled.

10. The method of claim 9, wherein the determination (130) comprises determining whether a current braking force applied to non-steered wheels of the vehicle fulfills the safety condition, and/or determining whether a maximum braking force applicable to non-steered wheels of the vehicle fulfills the safety condition.

11. A control system (600) comprising one or more control units configured to perform the method of any of claims 2-10.

12. A vehicle (200) comprising the computer system of claim 1 and/or processing circuitry configured to perform the method of any of claims 2-10.

13. The vehicle of claim 12, further comprising one or more steered wheels with individual drive.

14. A computer program product (700) comprising program code for performing, when executed by processing circuitry, the method of any of claims 2-10.

15. A non-transitory computer-readable storage medium (700) comprising instructions, which when executed by processing circuitry, cause the processing circuitry to perform the method of any of claims 2-10.

FIG. 1

FIG. 2

FIG. 3

FIG. 4

FIG. 5

FIG. 6

FIG. 7

FIG. 8

Europäisches
Patentamt

European
Patent Office

Office européen
des brevets

## EUROPEAN SEARCH REPORT

**Application Number**

EP 24 15 8930

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/222966 A1 (SHINMURA KOICHI [JP] ET AL) 2 September 2010 (2010-09-02) * paragraphs [0002], [0039] - [0041], [0045], [0046], [0055] - [0062], [0068] - [0072], [0076]; claims 1-4; figures 1-5 * ----- | 1-15 | INV. B62D9/00 |
| A | WO 2023/237174 A1 (VOLVO TRUCK CORP [SE]) 14 December 2023 (2023-12-14) * abstract; figures 1-4 * ----- | 1,2, 11-15 | |

**TECHNICAL FIELDS SEARCHED (IPC)**

B62D

The present search report has been drawn up for all claims

| Place of search | Date of completion of the search | Examiner |
|---|---|---|
| The Hague | 31 July 2024 | Janusch, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 8930

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | | Publication date |
|---|---|---|---|---|
| US 2010222966 A1 | 02-09-2010 | EP | 1886901 A1 | 13-02-2008 |
| | | JP | 5086582 B2 | 28-11-2012 |
| | | JP | 2008037323 A | 21-02-2008 |
| | | US | 2008208412 A1 | 28-08-2008 |
| | | US | 2010222966 A1 | 02-09-2010 |
| WO 2023237174 A1 | 14-12-2023 | NONE | | |

EPO FORM P0459

For more details about this annex : see Official Journal of the European Patent Office, No. 12/82